# EUROPÄISCHE PATENTSCHRIFT

(11) **EP 3 403 755 B1**
(45) Veröffentlichungstag und Bekanntmachung des Hinweises auf die Patenterteilung: **27.09.2023**
(21) Anmeldenummer: 18168117.2
(22) Anmeldetag: 19.04.2018
(51) Int. Cl.: B23H 9/10, B23H 3/04, B23H 11/00

(54) **VERFAHREN UND VORRICHTUNG ZUR HERSTELLUNG EINES METALLBAUTEILS, INSBESONDERE EINES SCHAUFELBAUTEILS EINER STRÖMUNGSMASCHINE**
METHOD AND APPARATUS FOR PRODUCING A METAL COMPONENT, IN PARTICULAR A BLADE COMPONENT OF A TURBOMACHINE
PROCÉDÉ ET DISPOSITIF DE FABRICATION D'UN COMPOSANT MÉTALLIQUE, EN PARTICULIER D'UN AUBE D'UNE TURBOMACHINE

(30) Priorität: 17.05.2017 DE 102017110735
(43) Veröffentlichungstag der Anmeldung: 21.11.2018
(73) Patentinhaber: Leistritz Turbinentechnik Nürnberg GmbH, 90459 Nürnberg (DE)
(72) Erfinder: Schmidt, Georg, 91126 Schwabach (DE); Liebl, Cindy, 90530 Wendelstein (DE)
(74) Vertreter: Lindner Blaumeier Patent- und Rechtsanwälte

(56) Entgegenhaltungen:
- EP-A1- 2 639 002
- DE-A1-102008 012 596
- DE-A1-102011 082 795
- DE-A1-102012 201 052
- DE-A1-102014 218 169
- DE-A1-102015 102 720
- DE-C1- 19 517 548
- US-A- 4 999 093
- US-A1- 2006 201 823
- ANDREAS REBSCHLÄGER ET AL: "Video based Process Observations of the Pulse Electrochemical Machining Process at High Current Densities and Small Gaps", PROCEDIA CIRP, Bd. 14, 1. Januar 2014 (2014-01-01), Seiten 418-423, XP055508781, NL ISSN: 2212-8271, DOI: 10.1016/j.procir.2014.03.105
- F. KLOCKE ET AL: "Results of Surface Integrity and Fatigue Study of PECM and PEO Processed [gamma]-TiAl for Turbine Applications", PROCEDIA CIRP, Bd. 42, 1. Januar 2016 (2016-01-01), Seiten 131-136, XP055508738, NL ISSN: 2212-8271, DOI: 10.1016/j.procir.2016.02.207

## Beschreibung

Die Erfindung betrifft ein Verfahren zur Herstellung eines Metallbauteils, insbesondere eines Schaufelbauteils einer Strömungsmaschine, das zur Erzeugung einer dreidimensionalen Form zur Abtragung von Material elektrochemisch bearbeitet wird, wozu wenigstens eine Elektrode benachbart und über einen Kanalspalt beabstandet zu einem zu bearbeitenden Bauteilabschnitt positioniert und bei Vorhandensein eines Elektrolyten ein Strom an die Elektrode und das Bauteil angelegt und die Elektrode aus einer Ausgangsposition in eine Endposition in Richtung des Bauteils bewegt wird.

Zur Bearbeitung metallener Werkstücke, die aus einem elektrisch leitfähigen Material bestehen, wird, wenn komplexe Geometrien zu erzeugen sind, ein Verfahren zur elektrochemischen Abtragung (ECM - Electro Chemical Machining) verwendet. Ein Beispiel eines Werkstücks, das durch eine solche ECM-Bearbeitung hergestellt werden kann, ist ein Schaufelbauteil einer Strömungsmaschine wie beispielsweise eine Triebwerksschaufel oder Ähnliches.

Bei einem ECM-Verfahren handelt es sich um ein spanloses Abbildungsverfahren. Eine hierfür dienliche Vorrichtung umfasst eine, zumeist mehrere Elektroden, die linear mittels einer geeigneten Linearantriebseinheiten von einer Ausgangsposition bei noch unbearbeitetem Werkstück und eine Endposition mit dann bearbeitetem Werkstück bewegbar sind. Diese bewegbaren Elektroden bilden entsprechende Kathoden, während das Werkstück die Anode bildet. Zwischen den zum Werkstück gerichteten Abbildungsflächen, die die dreidimensionale Endgeometrie, die das Werkstück aufweisen soll, definieren, und der Werkstoffoberfäche selbst ist während des gesamten Abbildungsverfahrens ein Kanalspalt gebildet, der um das Werkstück geschlossen umläuft, so dass ein Elektrolyt in diesem Kanal zirkulieren respektive strömen kann, der das gelöste Material aufnimmt und abtransportiert.

Zur Bearbeitung des Metallbauteils ist es bekannt, bei permanent anliegendem Strom und permanent anliegender Spannung und stetigem Elektrolytfluss die eine oder die mehreren Elektroden aus ihrer Ausgangsposition kontinuierlich in die Endposition zu bewegen. Es findet ein kontinuierlicher Materialabtrag statt, bis die zu erzielende Endkontur erreicht ist. Diese Bearbeitungsweise wird "Generatorsenken" genannt.

Ist eine extrem hohe Abbildungsgenauigkeit und eine hohe Oberflächengüte gewünscht, so schließt sich an das Generatorsenken ein zweiter Bearbeitungsschritt, das sogenannte "PECM-Verfahren (PECM = Precision Electro Chemical Machining) an. Bei diesem Verfahren wird der Strom und die Spannung mit einer Frequenz von üblicherweise 5 - 10 Hz gepulst angelegt, es ist also ein Pulsverfahren. Die Elektrode wird mit eben dieser Frequenz zwischen einer Arbeitsposition, in der der Strompuls anliegt, und einer Nichtarbeitsposition, in der Strom und Spannung nicht anliegen und der sie etwas weiter vom Werkstück beabstandet ist, über den Antriebsmotor verstellt. Diese Verstellung dient dazu, den beim PECM-Verfahren schmäleren Kanalspalt, verglichen mit dem Generatorsenken, kurzzeitig etwas aufzufahren, so dass der Elektrolyt die Abtragprodukte besser ausspülen kann. Da während des eigentlichen Materialabtrags die Elektroden noch näher am Werkstück sind, ist die Abbildungsgenauigkeit noch präziser und die Oberflächengüte noch besser.

Sollten nach einer ersten Bearbeitung durch Generatorsenken eine PECM-Bearbeitung stattfinden, ist es erforderlich, das bereits bearbeitete Werkstück aus der den ersten Verfahrensschritt durchführenden ECM-Vorrichtung zu entnehmen und in eine Vorrichtung einzusetzen, in der das PECM-Verfahren durchgeführt wird. Dieser Wechsel ist insoweit problematisch, als er einerseits aufwändig ist, und andererseits das Werkstück in der PECM-Vorrichtung neu zu spannen ist, was zu minimalen Positionierungsungenauigkeiten und damit zu Abbildungsfehlern führen kann. Ferner werden neue Elektroden in der zweiten ECM-Vorrichtung verwendet.

Aus der DE 10 2008 012 596 A1 sind ein Verfahren und eine Vorrichtung bekannt, bei denen in derselben Vorrichtung zunächst eine ECM-Bearbeitung und anschließend eine ECM-Feinbearbeitung mit gepulstem Strom durchgeführt wird.

Der Erfindung liegt damit das Problem zugrunde, ein Verfahren anzugeben, das gegenüber bisher bekannten Verfahren verbessert ist.

Zur Lösung dieses Problems ist ein Verfahren gemäß Anspruch 1 vorgesehen.

Erfindungsgemäß ist vorgesehen, die ECM-Bearbeitung des Werkstücks in einem einzigen Zug in einer einzigen ECM-Vorrichtung durchzuführen. Erfindungsgemäß schließen sich zwei Arbeitsmodi unmittelbar aneinander an, das heißt, dass während der Bearbeitung automatisch vom ersten in den zweiten Arbeitsmodus umgeschaltet wird. Im ersten Arbeitsmodus erfolgt ein Generatorsenken, das heißt, dass permanent ein bestimmter Strom und eine bestimmte Spannung anliegt, wie auch ein permanenter Elektrolytfluss durch den Kanalspalt gegeben, wie auch die oder alle Elektroden, ausgehend von der Ausgangsposition, kontinuierlich in Richtung des Bauteils bewegt werden. Die Bearbeitung erfolgt bei einer ersten Spaltbreite, die beispielsweise 0,2 - 0,3 mm beträgt. In diesem ersten Arbeitsmodus erfolgt quasi die "Grobbearbeitung", sie zielt auf einen hinreichend hohen Materialabtrag ab. Dieser erste Arbeitsmodus findet so lange statt, bis eine vorbestimmte Abtragtiefe erreicht ist, was entsprechend messtechnisch erfasst werden kann. Sobald diese vorbestimmte Abtragtiefe erreicht ist, wird automatisch in den zweiten Arbeitsmodus gewechselt, im Rahmen dessen die eigentliche "Feinbearbeitung" auf das Endkonturmaß stattfindet. Im Rahmen dieses zweiten Arbeitsmodus erfolgt ein gepulster Betrieb, das heißt, dass nunmehr mit einem PECM-Verfahren gearbeitet wird, während im ersten Arbeitsmodus ein Generatorsenken durchgeführt wird. Im zweiten Arbeitsmodus liegen der Strom und die Spannung nur gepulst an, und zwar nur dann, wenn die oder alle Elektroden in ihrer Arbeitsposition sind. Je nach Pulsfrequenz wird der Strom und die Spannung zu- oder abgeschaltet, in entsprechender Weise erfolgt auch die Elektrodenbewegung zwischen der Arbeitsposition bei anliegendem Strom und Spannung und der Nichtarbeitsposition bei abgeschaltetem Strom und Spannung. In der Arbeitsposition ist die Spaltbreite deutlich kleiner als im ersten Arbeitsmodus, im zweiten Arbeitsmodus beträgt sie zwischen 0,05 - 0,1 mm. Dieses Pulsverfahren wird so lange durchgeführt, bis die Endkontur erreicht ist, mithin also die Elektroden in die Endposition gefahren sind.

Erfindungsgemäß wird folglich in einer einzigen Aufspannung des Werkstücks unter Verwendung derselben Elektroden ein zweistufiges ECM-Verfahren vollautomatisch durchgeführt, indem mit einem ersten Arbeitsmodus ein Generatorsenken und nach vollautomatischem Umschalten in einen zweiten Arbeitsmodus eine PECM-Bearbeitung durchgeführt wird. Aufgrund des Umstands, dass weder das Werkstück zur Durchführung der unterschiedlichen Arbeitsmodi zu wechseln respektive in eine andere Vorrichtung einzusetzen ist, noch dass unterschiedliche Elektroden für das Generatorsenken und den PECM-Betrieb erforderlich sind, wird folglich einerseits ein zügiges Arbeiten ermöglicht, zum anderen auch ein hochgenaues präzises Arbeiten, da sich aus einem Wechsel einer der Verfahrenskomponenten ergebende Toleranzen oder Schwierigkeiten im vorliegenden Fall gerade nicht einstellen.

Wie bereits erwähnte sollte die erste Spaltbreite zwischen 0,2 - 0,3 mm und die zweite Spaltbreite zwischen 0,03 - 0,1 mm betragen.

Der permanent anliegende Strom sowie der Strompuls sollten zwischen 1500 - 20000 A betragen.

Die permanent anliegende Spannung und der Spannungspuls sollte zwischen 6 - 200 V liegen.

Die Frequenz der Bewegung zwischen der Nichtarbeits- und der Arbeitsstellung wie auch die Strom- und Spannungspulsfrequenz sollte zwischen 5 - 15 Hz betragen.

Der Druck des den Kanalspalt durchströmenden Elektrolyten sollte zwischen 5 - 20 bar betragen, wobei der Druck insbesondere im zweiten Arbeitsmodus je nach Elektrodenposition variiert.

Erfindungsgemäß wird die Elektrode sowohl im ersten als auch im zweiten Arbeitsmodus mit demselben Antriebsmotor bewegt. Das heißt, dass seitens der ECM-Vorrichtung, die dazu ausgestaltet ist, sowohl den ersten als auch den zweiten Arbeitsmodus durchzuführen, ein und dieselbe Linearantriebseinheit respektive bei mehreren Elektroden dieselben Linearantriebseinheiten sowohl im ersten als auch im zweiten Arbeitsmodus verwendet werden. Um dies auf einfache und hochpräzise Weise zu ermöglichen wird als Antriebsmotor bevorzugt ein Torquemotor verwendet.

Kommen mehrere Elektroden zum Einsatz, so werden diese gleichzeitig relativ zu dem Bauteil im ersten und im zweiten Arbeitsmodus bewegt, wobei jede Elektrode mittels eines separaten Antriebsmotors, vorzugsweise einem Torquemotor, bewegt wird, also separat gesteuert werden kann. Wenngleich grundsätzlich eine Bewegungskopplung zweier Elektroden denkbar wäre, ist es zweckmäßig, jede Elektrode separat anzutreiben, um im Verfahren auf etwaige Situationen reagieren zu können.

Bevorzugt überlappen sich die Elektroden, aneinander anliegend, randseitig und begrenzen den um das Bauteil umlaufenden Spalt. Das heißt, dass sich benachbarte Elektroden während der gesamten Verstellbewegung unabhängig davon, in welchem Arbeitsmodus gearbeitet wird, randseitig berühren und übergreifen bzw. überlappen, so dass sie mit ihren Abbildungsflächen, die aufgrund der Berührung und des Überlapps aneinander anschließen, den um das Werkstück umlaufenden, geschlossenen Kanalspalt begrenzen und abdichten. Während der Verstellbewegung ändern die Elektroden, da sie mit unterschiedlichen Bewegungsrichtungen relativ zum Werkstück verstellt werden, zwar ihre Relativposition zueinander, sie bleiben jedoch permanent in Kontakt, wobei der Überlapp, da sich die Elektroden aufgrund des Materialabtrags einander noch weiter annähern, während der Verstellbewegung zunimmt. Aufgrund der permanenten Berührung bleibt auch der Fluidkanal permanent über die Abbildungsflächen begrenzt und dicht geschlossen.

Dies führt dazu, dass der gesamte Werkstückbereich, der von den Abbildungsflächen übergriffen ist, permanent übergriffen ist, das heißt, dass jedem Oberflächenpunkt des Werkstückabschnitts, der von den mehreren einander überlappenden Abbildungsflächen übergriffen ist, während der gesamten ECM-Bearbeitung sowohl im ersten Arbeitsmodus als auch im zweiten Arbeitsmodus eine Abbildungsfläche gegenüberliegt. Dies führt wiederum dazu, dass der gesamte Werkstückbereich, der über die aneinander anschließenden Abbildungsflächen übergriffen ist, homogen bearbeitet werden kann, es ergeben sich folglich keine Kanten- oder Randbereiche am Übergang von einer Elektrode zur anderen, da aufgrund des Übergriffs respektive Überlapps auch in diesem Übergangsbereich kein Elektrodenspalt gegeben ist. Das fertig bearbeitete Werkstück zeigt demzufolge im über die Abbildungsflächen bearbeiteten Bereich ein homogenes Bearbeitungsbild, die Arbeitsqualität ist gegenüber bisherigen Arbeitsweisen deutlich verbessert, und zwar sowohl bezogen auf den ersten als auch den zweiten Arbeitsmodus.

Es ist denkbar, wenigstens drei Elektroden zu verwenden, wobei die beiden äußeren Elektroden an einem positionsfesten, den Kanalspalt begrenzenden Dichtbauteil entlanggleiten. Bei dieser Erfindungsausgestaltung wird folglich der Kanalspalt nach außen über die Abbildungsflächen der drei einander berührenden Elektroden sowie das Dichtbauteil abgeschlossen. Während der Verstellbewegung der Elektroden, die beispielsweise mit ihren Bewegungsachsen orthogonal zueinander stehen (das heißt, dass zwei Elektroden einander gegenüberliegen und aufeinander zubewegt werden, während die mittlere Elektrode senkrecht dazu bewegt wird), gleiten die beiden äußeren Elektroden an dem Dichtbauteil ab, bis die Endposition erreicht ist. Bezogen auf die Herstellung eines Schaufelbauteils für eine Strömungsmaschine, das eine längliche Querschnittsform mit gewölbten Ober- und Unterseiten sowie Kanten mit relativ kleinem Radius aufweist, wird über zwei Elektroden, die die Ober- und Unterseite bearbeitet, während die mittlere Elektrode die eine Kante bearbeitet, was bei dem erfindungsgemäßen Verfahren aufgrund des Überlapps und damit der Ausbildung einer quasi großflächigen, geschlossenen Abbildungsfläche ohne weiteres möglich ist. An der gegenüberliegenden zweiten Kante erfolgt die Bearbeitung der Werkstückkante beispielsweise dadurch, dass die beiden Elektroden in der Endposition aneinander anliegen und zusammengefahren sind, das heißt, dass auch dortseits ein Materialabtrag und gleichzeitig eine Kantenausformung erfolgt.

Alternativ zur Verwendung eines solchen Dichtbauteils ist es, wenn vier Elektroden verwendet werden, die aneinander anliegen respektive überlappen, und die den das Bauteil umlaufenden Kanalspalt begrenzen. Bei dieser Erfindungsausgestaltung sind also vier separat bewegliche Elektroden vorgesehen, deren Bewegungsachsen beispielsweise orthogonal zueinander stehen. Zwei Elektroden bilden, bezogen auf das Ausführungsbeispiel des Schaufelbauteils, die Ober- und Unterseite des Werkstücks aus, während die beiden anderen, einander gegenüberliegenden Elektroden mit ihren spezifischen Abbildungsflächen die beiden Schaufelkanten ausbilden. Alle vier Elektroden überlappen einander, bevorzugt übergreifen die beiden die Kanten ausbildenden Elektroden mit ihren Abbildungsflächen die beiden die Ober- und Unterseite ausbildenden Elektroden. Bei dieser Ausgestaltung wird folglich der Kanalspalt ausschließlich über die vier interagierenden Elektroden begrenzt. Diese werden simultan und synchron von der Ausgangs- in die Endposition innerhalb der beiden Arbeitsmodi bewegt.

Um für eine permanente Kanalabdichtung zu sorgen ist es erforderlich, dass der jeweilige Elektrodenüberlapp hinreichend dicht ist. Um dies zu ermöglichen, gleichzeitig aber auch ein exaktes Entlanggleiten der Elektroden aufeinander zu ermöglichen, sind an der oder den Elektroden, die benachbarte Elektroden übergreifend, an der Abbildungsflächenseite entsprechende Gleitflächen ausgebildet, die auf entsprechenden, an der Außenseite der benachbarten Elektrode ausgebildeten Gleitflächen aufliegen und entlang dieser abgleiten. Hierüber wird eine hinreichend dichte, jedoch ein Gleiten ermöglichende Anlage gewährleistet. Die Elektroden sind beispielsweise aus Messing, so dass ein Material mit guten Gleiteigenschaften verwendet wird.

Wenngleich bevorzugt ein Schaufelbauteil für eine Strömungsmaschine über das erfindungsgemäße Verfahren hergestellt wird, das neben dem eigentlichen Schaufelteil oft auch einen Schaufelfuß und ein Deckband aufweist, wobei das Schaufelteil auch über seine Länge leicht verdreht, also getwistet sein kann, ist es natürlich denkbar, auch andersartig geformte Bauteile mit dem erfindungsgemäßen Verfahren herzustellen.

Neben dem Verfahren selbst betrifft die Erfindung ferner eine Vorrichtung zur Durchführung des Verfahrens der beschriebenen Art gemäß dem Anspruch 12.

Bei dieser Vorrichtung kommt eine zentrale Steuerungseinrichtung zum Einsatz, die sämtliche wesentlichen Komponenten, die für den ECM-Betrieb erforderlich sind, steuert. Die Steuerungseinrichtung kommuniziert mit wenigstens einer entsprechenden Sensoreinrichtung oder Messeinrichtung, die es ermöglicht, exakt die Abtragtiefe zu erfassen, um auf diese Informationen gestützt den Zeitpunkt zu erfassen, zu dem vom ersten Arbeitsmodus in den zweiten Arbeitsmodus automatisch umgeschaltet wird. Die Steuerungseinrichtung steuert mit dem Umschaltzeitpunkt sämtliche relevanten Komponenten in der entsprechenden, dem zweiten Arbeitsmodus entsprechenden Weise an, so dass ohne jeden Zeitverzug vom ersten Arbeitsmodus in den zweiten Arbeitsmodus gewechselt wird.

Wenngleich es sein kann, dass nur eine Elektrode vorgesehen ist, wenn ein Werkstück nur an einer Seite zu bearbeiten ist, ist es bevorzugt, dass wenigstens drei Elektroden vorgesehen sind, die um den Umfang des Werkstücks versetzt angeordnet sind und sich mit ihren Abbildungsflächen während der gesamten Verstellbewegung von der Ausgangs- in die Endposition einander berührend abschnittsweise übergreifen und mit ihren Abbildungsflächen einen um den Umfang des Werkstücks geschlossen umlaufenden Kanalspalt bzw. Fluidkanal begrenzen.

Zur Ermöglichung der Relativbewegung der Elektroden zueinander bei gleichzeitigem dichten Überlapp ist zweckmäßigerweise eine zwischen zwei Elektroden vorgesehene Elektrode an der Abbildungsfläche mit zwei Gleitflächen versehen, mit denen sie auf jeweiligen äußeren Gleitflächen der beiden benachbarten Elektroden gleitet.

Bevorzugt wird mit der Vorrichtung ein Schaufelbauteil einer Strömungsmaschine hergestellt, das eine Ober- und eine Unterseite sowie zwei einander ebenfalls gegenüberliegende Kanten aufweist. Denkbar ist es dabei bei Bearbeitung eines solchen Werkstücks, dass zwei einander gegenüberliegende Elektroden die Ober- und die Unterseite des Werkstücks abbildende Abbildungsflächen aufweisen, während die wenigstens eine zwischen diesen angeordnete dritte Elektrode eine den Kantenbereich des Werkstücks abbildende Abbildungsfläche aufweist. Beispielsweise übergreift die dritte, mittlere Elektrode die beiden äußeren, ersten und zweiten Elektroden. Während die Abbildungsfläche der ersten und zweiten Elektrode sehr großflächig ist, da diese die Ober- und Unterseiten abbilden, ist die Abbildungsfläche der dritten Elektrode in dem Abschnitt, in dem sie in der Endposition die Kante ausbildet, nur relativ klein ausgeführt, da bei zusammengefahrenen Elektroden die Kante nur einen sehr kleinen Radius aufweist und nur einen kleinen Flächenbereich der Werkstückoberfläche darstellt. Benachbart zu diesem Abbildungsflächenabschnitt schließen sich die entsprechenden Gleitflächen an, die es ermöglichen, dass die Elektroden in die Endposition zusammengefahren werden können.

Zweckmäßig ist es insbesondere für die Herstellung eines solchen, eine komplexe gewölbte und gegebenenfalls getwistete Geometrie aufweisenden Schaufelbauteils, wenn eine der dritten Elektrode gegenüberliegend angeordnete vierte Elektrode vorgesehen ist, die ebenfalls eine den Kantenbereich des Werkstücks abbildende Abbildungsfläche aufweist. Auch diese Elektrode übergreift beispielsweise die erste und die zweite Elektrode randseitig, eben wie dies auch die dritte Elektrode tut.

Grundsätzlich können erfindungsgemäß, unabhängig von der Geometrie des Werkstücks, also drei oder vier Elektroden vorgesehen sein.

Wird wie beschrieben als Werkstück ein Schaufelbauteil einer Strömungsmaschine mit einem Schaufelabschnitt mit einem flachen, länglichen Querschnitt hergestellt respektive bearbeitet, so weist die erste und die zweite Elektrode die flache Ober- und Unterseite abbildende Abbildungsflächen auf, während die dritte und gegebenenfalls die vierte Elektrode den einen kleinen Radius aufweisenden Kantenbereich abbildende Abbildungsflächen aufweist.

Auch hier ist es denkbar, wenn bei drei Elektroden die beiden äußeren Elektroden an einem den Fluidkanal begrenzenden, positionsfesten Dichtbauteil entlang gleiten.

In Weiterbildung der Erfindung kann vorgesehen sein, dass die Bewegungsachsen der Linearantriebseinheiten zweier benachbarter Elektroden unter einem Winkel von 90° zueinander stehen. Es ist also eine rechtwinklige Achsanordnung gewählt, das heißt, dass entweder die drei oder die vier Elektroden senkrecht zueinander bewegt werden, wenn sie von der Ausgangs- in die Endposition verfahren werden. Alternativ ist es denkbar, dass die Bewegungsachsen der Linearantriebseinheiten zweier benachbarter Elektroden auch unter einem Winkel kleiner oder größer 90° zueinander stehen. Dies kann je nach Art oder Geometrie des zu bearbeitenden Werkstücks erforderlich sein.

Zweckmäßig ist es, wenn die Linearantriebseinheiten zur Verstellung des Winkels zwischen den Bewegungsachsen zweier benachbarter Linearantriebseinheiten längs einer Kreisbahn bewegbar sind, wobei vorzugsweise jede Linearantriebseinheit über einen Stellmotor längs der Kreisbahn bewegbar ist. Diese Erfindungsausgestaltung ermöglicht ein flexibles Verstellen der Raumrichtungen der Bewegungsachsen relativ zueinander, mithin also eine Zwischenwinkelvariation, so dass mit ein und derselben Vorrichtung eine Vielzahl von Bearbeitungsaufgaben erfüllt werden können, stets vor dem Hintergrund, dass jede Bearbeitungsaufgabe mit einem ersten und zweiten Arbeitsmodus durchgeführt werden kann.

Der oder jeder Antriebsmotor ist bevorzugt ein Torquemotor, der eine hochpräzise Elektrodenpositionierung und Elektrodenbewegung ermöglicht, was insbesondere für die Durchführung des gepulsten PECM-Betriebs besonders vorteilhaft ist.

Weiterhin kann jeder Elektrode eine mit einer Steuerungseinrichtung kommunizierende Sensoreinrichtung zugeordnet sein, wobei die Sensoreinrichtung bevorzugt der Linearantriebseinheit zugeordnet ist. Über diese Sensoreinrichtung kann die Position der Elektrode erfasst werden, wobei die Steuerungseinrichtung den Betrieb in Abhängigkeit der Sensorerfassung steuert.

Weiterhin kann eine Positioniereinrichtung zum automatischen Positionieren des Werkstücks in der Arbeitsposition in einer Arbeitskammer vorgesehen sein. Diese Positioniereinrichtung kann das Werkstück in einer reinen Linearbewegung beispielsweise vertikal von oben in die Arbeitskammer einfahren und während der ECM-Bearbeitung fixieren. Daneben ist es denkbar, dass das Werkstück mittels der Positioniereinrichtung während der Verbringung des Werkstücks in die Arbeitsposition und/oder während sich das Werkstück in der Arbeitsposition befindet um seine Längsachse drehbar ist. Dies ermöglicht es, einem etwaigen Twist des Schaufelabschnitts folgen zu können und sogar während der Bearbeitung eine geringe Winkelverstellung, beispielsweise um maximal 1°, vorzunehmen, wenn dies aus fertigungstechnischer Sicht zweckmäßig ist.

Ferner kann ein der Positioniereinrichtung zugeordnetes Magazin vorgesehen sein, in dem mehrere zu bearbeitende Werkstücke einbringbar sind, die über die Positioniereinrichtung oder eine Wechseleinrichtung automatisch entnehmbar sind. Diese Positioniereinrichtung samt Magazin ermöglicht demzufolge einen vollautomatischen Arbeitsbetrieb. Eine die ECM-Vorrichtung bedienende Person bestückt vor Arbeitsbeginn das Magazin mit der Anzahl an zu bearbeitenden Werkstücken. Die Positioniereinrichtung oder eine ihr zugeordnete Wechseleinrichtung nimmt ein zu bearbeitendes Werkstück automatisch aus dem Magazin und übergibt es im Falle einer Wechseleinrichtung an die Positioniereinrichtung, die es sodann in die Arbeitskammer verbringt. Fährt die Positioniereinrichtung selbst in das Magazin, so verbringt sie das Werkstück unmittelbar in die Arbeitskammer. Sodann erfolgt die ECM-Bearbeitung, an deren Ende die Positioniereinrichtung das bearbeitete Werkstück wieder aus der Arbeitskammer nimmt und entweder direkt in das Magazin verbringt, oder an die Wechseleinrichtung übergibt, die es sodann in das Magazin verbringt. Sodann wird das nächste Werkstück gegriffen etc. Es ist also ein vollautomatischer Arbeitsbetrieb vorgesehen, bei dem die bedienende Person letztlich nach Bestückung des Magazins nur einmalig den Arbeitsstart auslösen muss. Sodann verlaufen sämtliche Handlungen vollautomatisch bis zum Ende des Arbeitszyklus, der damit endet, dass das letzte bearbeitete Werkstück wieder ins Magazin verbracht ist.

Um eine definierte Schnittstelle für den Zugriff der Positioniereinrichtung respektive der Wechseleinrichtung bezüglich des Werkstücks zu haben, ist es zweckmäßig, wenn jedes Werkstück in einem Werkstückhalter, der über die Positioniereinrichtung oder die Wechseleinrichtung greifbar ist, aufgenommen ist. Dieser Werkstückhalter weist eine definierte Kopplungsgeometrie auf, mit der er definiert von der Wechseleinrichtung oder der Positioniereinrichtung gegriffen werden kann.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein Flussdiagramm zur Erläuterung des erfindungsgemäßen Verfahrens,
- Fig. 2: eine erste Elektrodenanordnung einer ECM-Vorrichtung mit drei Elektroden in der Ausgangsposition,
- Fig. 3: die Elektrodenanordnung aus Fig. 2 in der Endposition,
- Fig. 4: eine zweite Elektrodenanordnung einer ECM-Vorrichtung mit vier Elektroden in der Ausgangsposition,
- Fig. 5: die Elektrodenanordnung aus Fig. 4 in der Endposition,
- Fig. 6: eine geschnittene Teilansicht einer ECM-Vorrichtung mit Darstellung der Elektroden und deren Linearantriebseinheiten,
- Fig. 7: eine Prinzipdarstellung einer ECM-Vorrichtung mit verschwenkbaren Linearantriebseinheiten, und
- Fig. 8: eine Prinzipdarstellung einer ECM-Vorrichtung mit sämtlichen Komponenten.

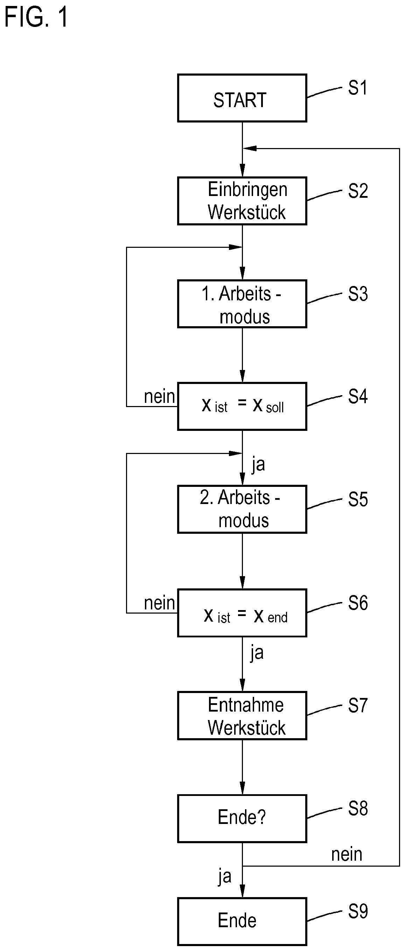

Fig. 1 zeigt in Form eines Flussdiagramms die wesentlichen Schritte des erfindungsgemäßen Verfahrens.

Im Schritt S1 startet das Verfahren, die die Vorrichtung bedienende Person löst den Arbeitsbeginn aus. Zuvor hat die Person ein etwaiges einer Positioniereinrichtung der Vorrichtung zugeordnetes Magazin bereits mit der Anzahl im gesamten Arbeitszyklus zu bearbeitenden Werkstücken bestückt.

Nach dem Start des Betriebs erfolgt im Schritt S2 das Einbringen eines zu bearbeitenden Werkstücks in die Arbeitskammer. Hierzu kann beispielsweise die Positioniereinrichtung oder eine Wechseleinrichtung ein Werkstück aus dem Magazin entnehmen und an die Positioniereinrichtung übergeben. In jedem Fall wird das Werkstück seitens der Positioniereinrichtung in die Arbeitskammer der Vorrichtung eingebracht, in der die ECM-Bearbeitung stattfindet.

Mit Einbringen des Werkstücks in die Arbeitskammer und dichtem Verschließen der Arbeitskammer erfolgt sodann die ECM-Bearbeitung. Gemäß Schritt S3 erfolgt zunächst die Bearbeitung im ersten Arbeitsmodus. In diesem Arbeitsmodus, dem sogenannten Generatorsenken, wird bei einer Kanalspaltbreite von ca. 0,2 - 0,3 mm mit permanent anliegendem Strom im Bereich von mehreren 1000 A, permanent anliegender Spannung von ca. 6 - 200 V und permanentem Elektrolytfluss die Elektrodenzustellung konstant vorgenommen, das heißt, dass die Elektroden mit mehr oder weniger konstantem Vorschub in Richtung des Bauteils bewegt werden, während welcher Bewegung der elektrochemische Materialabtrag erfolgt. Die Abtragsprodukte werden über den Elektrolytfluss aus dem Kanalspalt ausgetragen.

Während des ersten Arbeitsmodus wird permanent, siehe Schritt S4, die Abtragstiefe erfasst, die in Fig. 1 mit xᵢₛₜ dargestellt ist. Es wird permanent geprüft, ob die tatsächliche Abtragstiefe einer vorbestimmten Abtragstiefe xₛₒₗₗ entspricht, deren Erreichen den Umschaltzeitpunkt darstellt, zu dem in einen zweiten Arbeitsmodus umgeschaltet werden soll. Zur Erfassung der Abtragstiefe ist eine geeignete Mess- oder Sensoreinrichtung oder entsprechend mehrere solcher Einrichtungen vorgesehen, über die beispielsweise die Elektrodenposition exakt erfasst werden kann, woraus ermittelt werden kann, wie viel Material abgetragen ist respektive wie groß die Abtragstiefe ist, ausgehend von der Ausgangsposition der Elektrode(n).

Ergibt sich, dass xᵢₛₜ ≠ xₛₒₗₗ ist, so wird der erste Arbeitsmodus gemäß Schritt S3 fortgesetzt.

Ergibt sich jedoch, dass xᵢₛₜ = xₛₒₗₗ, so wird seitens der den Betrieb der ECM-Vorrichtung steuernden zentralen Steuerungseinrichtung sofort in den zweiten Arbeitsmodus gemäß Schritt S5 umgeschaltet. In diesem zweiten Arbeitsmodus wird ein gepulster ECM-Betrieb gefahren. Der Strom, auch hier im Bereich mehrerer 1000 A, und die Spannung im Bereich von 6 - 200 V, wird nur noch gepulst angelegt, die Pulsfrequenz liegt im Bereich zwischen 5 - 15 Hz. Mit entsprechender Frequenz wird die oder werden die Elektroden über den jeweiligen Antriebsmotor der die Elektroden bewegenden Linearantriebseinheiten, vorzugsweise einen Torquemotor, zwischen einer Arbeitsposition bei anliegendem Strompuls und einer Nichtarbeitsposition bei fehlendem Strom verstellt. Die Spaltbreite des Kanalspalts in der Arbeitsposition ist deutlich geringer als im ersten Arbeitsmodus, sie liegt nun noch im Bereich zwischen 0,03 - 0,1 mm.

Durch diesen gepulsten Betrieb kann eine hochpräzise Abbildung und eine hervorragende Oberflächengüte des bearbeiteten Werkstücks erhalten werden.

Auch im zweiten Arbeitsmodus erfolgt gemäß Schritt S6 eine permanente Erfassung der Abtragstiefe xᵢₛₜ. Diese wird wiederum mit einer Vergleichstiefe verglichen, hier der Endtiefe x_{end}, die gleichzeitig das Erreichen der Endposition der Elektrodenzustellung markiert. Auch diese permanente Positionserfassung erfolgt wiederum seitens der Steuerungseinrichtung und über die Mess- oder Sensoreinrichtungen, die bereits im ersten Arbeitsmodus die Positionserfassung vorgenommen haben.

Ergibt sich, dass xᵢₛₜ ≠ x_{end} ist, so wird der zweite Arbeitsmodus gemäß Schritts S5 permanent weitergeführt.

Ergibt sich, das xᵢₛₜ = x_{end}, so wird der gesamte ECM-Vorgang beendet. Es erfolgt gemäß Schritt S7 die Entnahme des bearbeiteten Werkstücks aus der Arbeitskammer über die Positioniereinrichtung, wobei das Werkstück dann über die Positioniereinrichtung oder über die Wechseleinrichtung wieder in das Magazin verbracht wird.

Sodann wird im Schritt S8 geprüft, ob mit der Bearbeitung des letzten Werkstücks das gesamte Verfahren respektive der Zyklus beendet ist. Ergibt sich, dass dem so ist, so wird gemäß Schritt S9 das Arbeitsverfahren vollständig beendet. Anderenfalls kehrt die Routine wieder vor den Schritt S2 zurück, das heißt, dass ein neues Werkstück über die Positioniereinrichtung oder die Wechseleinrichtung gegriffen und eingebracht wird, woran sich die weiteren Schritten anschließen.

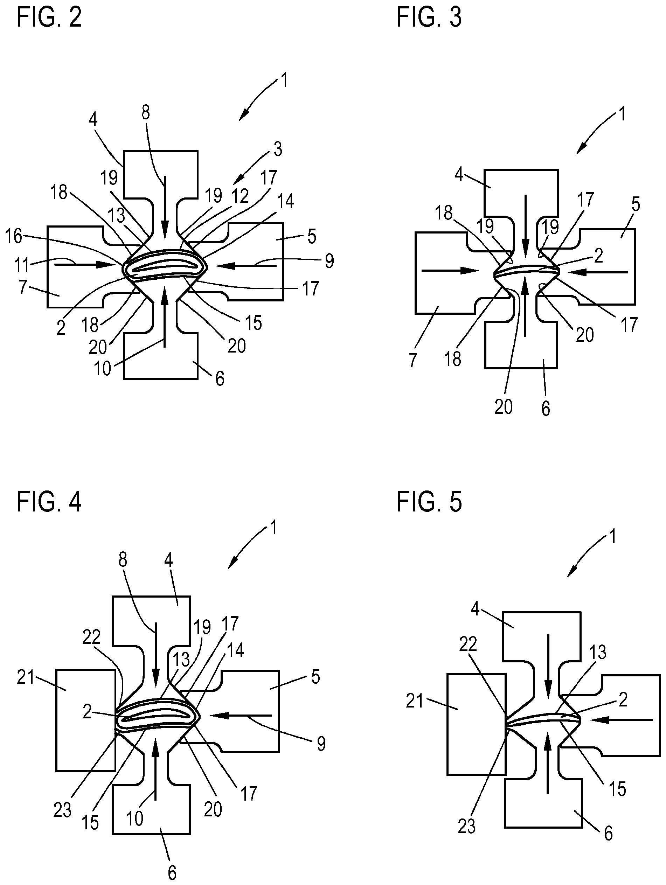

Fig. 2 zeigt als Teil einer erfindungsgemäßen Vorrichtung 1 zur elektrochemischen Bearbeitung eines metallenen Werkstücks 2 eine Elektrodenanordnung 3 umfassend im gezeigten Beispiel vier separate Elektroden 4, 5, 6, 7, die allesamt über separate, hier nicht näher gezeigte Linearantriebseinheiten relativ zum Werkstück 2 bewegbar sind. Die Elektroden 4 - 7 bilden Kathoden, während das Werkstück 2 die Anode bildet. Die Elektroden 4 - 7 sind über die Linearantriebseinheiten entlang der Bewegungsachsen 8, 9, 10, 11 linear bewegbar, wobei im gezeigten Ausführungsbeispiel die Bewegungsachsen 8 - 11 senkrecht zueinander stehen.

Im Betrieb ist ein permanenter, um das hier im Querschnitt gezeigte Werkstück 2 umlaufender, geschlossener spaltartiger Fluidkanal 12 vorgesehen, der beim gezeigten Ausführungsbeispiel ausschließlich über die Abbildungsflächen 13, 14, 15, 16 der Elektroden 4 - 7 radial respektive nach außen begrenzt und abgedichtet ist. Durch den Fluidkanal 12 strömt mit hinreichendem Druck senkrecht zur Darstellungsebene ein Elektrolyt, der der elektrochemischen Bearbeitung des Werkstücks 2 dient und über die gleichzeitig abgetragene Produkte aus dem Fluidspalt 12 transportiert werden.

Fig. 2 zeigt die Ausgangsstellung mit noch unbearbeitetem Werkstück 2. Ersichtlich greifen die Elektroden 4 - 7 ineinander respektive überlappen randseitig miteinander. Hierzu weisen die einander gegenüberliegenden Elektroden 5 und 7 randseitige ebene Gleitflächen 17 bzw. 18 auf, die außenseitig auf entsprechenden Gleitflächen 19, 20 der ebenfalls einander gegenüberliegenden Elektroden 4 und 6 berührend und abdichtend aufliegen. Es sind also an benachbarten Elektroden miteinander interagierende Gleitflächen gegeben. Die Elektroden 5 und 7 weisen, nachdem sie jeweils zwei benachbarte Elektroden 4 und 6 übergreifen, im Bereich der Abbildungsfläche quasi eine V-förmige Geometrie auf, wobei zwischen den Gleitflächen 17 bzw. 18 die eigentliche Abbildungsgeometrie, die die rundliche Kante des Werkstücks 2 abbilden soll, ausgebildet ist.

Jede Abbildungsgeometrie 13 - 16 ist abschnittsweise derart ausgeführt, dass sie in der Endposition das Negativ des Flächenabschnitts des fertig bearbeiteten Werkstücks 2, das mit der jeweiligen Elektrode 4 - 7 bearbeitet werden soll, zeigt. Im Falle der Elektroden 4 und 6 sind dies die Ober- und Unterseite des Werkstücks 2, das ein Schaufelbauteil für eine Strömungsmaschine ist. Im Falle der Elektroden 5 und 7 sind dies die entsprechenden, einen kleinen Radius aufweisenden beiden Kanten des Werkstücks 2.

Wie beschrieben zeigt Fig. 2 die Elektrodenanordnung 3 zu Beginn des eigentlichen ECM-Betriebs. Die Elektroden 4 - 7 sind relativ weit auseinandergefahren, der Grad der Überlappung ist noch nicht allzu groß. Sodann werden nach Zuschalten der Elektrolytförderung und Anlegen des Stromes und der Spannung in einem ersten Betriebsmodus, dem sogenannten "Generatorsenken" mit konstant anliegendem Strom und Spannung und linearem Verstellweg die Elektroden 4 - 7 in Richtung der Bewegungsachsen 8 - 11, also in Richtung der Pfeile, linear bewegt und folglich aufeinander zugeschoben. Aufgrund des anliegenden Stroms, der mehrere 1000 Ampere betragen kann, und der Spannung, die zwischen 6 und 200 V betragen kann, kommt es, dem ECM-Verfahren entsprechend, zu einem Abtrag des Werkstückmaterials an seiner Oberfläche, das heißt, dass das Werkstückvolumen reduziert wird. Die jeweiligen Oberflächen werden durch die jeweiligen ihnen gegenüberliegenden Abschnitte der Abbildungsflächen 13 - 17 der jeweiligen Elektroden 4 - 7 geformt.

Die lineare Verstellbewegung bei konstantem Strom und Spannung im ersten Betriebsmodus (Generatorsenken) wird so lange beibehalten, bis eine definierte Senktiefe, also eine definierte Zwischenposition, erreicht ist. Dies wird über eine geeignete Messtechnik oder Sensorik erfasst. Sodann wird seitens der zentralen Steuerungseinrichtung automatisch in einen zweiten Betriebsmodus umgeschaltet, dem sogenannten PECM-Modus. In diesem wird der Strom und die Spannung nur gepulst mit einer Frequenz von beispielsweise 5 - 15 Hz angelegt. Ein Strompuls wird angelegt, wenn sich die jeweilige Elektrode in der Arbeitsposition befindet. Wird der Strom abgestellt, wird die Elektrode geringfügig vom Werkstück 2 entfernt, so dass der Fluidkanal 12 weiter aufgemacht wird, also die Spaltbreite etwas vergrößert wird und der Elektrolyt besser hindurchströmen kann. Sodann wird wiederum die jeweilige Elektrode zugestellt und in die Arbeitsposition verbracht, woraufhin wieder Strom angelegt etc. Es ist also sowohl hinsichtlich des Stroms als auch hinsichtlich der Elektrodenpositionierung ein intermittierender Betrieb gegeben. Festzuhalten ist hierbei, dass die Spaltbreite im ersten Betriebsmodus, also beim Generator Senken, geringfügig größer ist als im zweiten Betriebsmodus, also beim PECM-Betrieb. Während im ersten Betriebsmodus die Spaltbreite ca. 0,2 - 0,3 mm beträgt, beträgt sie im zweiten Betriebsmodus beispielsweise 0,05 - 0,1 mm, wenn Strom anliegt, mithin also abgetragen wird. Im zweiten Betriebsmodus wird die Spaltbreite durch das Auffahren der Elektroden beispielsweise auf 0,2 - 0,3 mm vergrößert.

Es erfolgen also zwei unterschiedliche Betriebsmodi innerhalb eines einzigen Bearbeitungsvorgangs, also einem Verstellvorgang von einer in Fig. 2 gezeigten Ausgangsposition in die in Fig. 3 gezeigte Endposition, in der, siehe Fig. 3, die Elektroden 4 - 7 weit zusammengefahren sind. Die Überlappungsbereiche der Gleitflächen 17, 18 und 19, 20 sind demzufolge deutlich vergrößert, verglichen mit der Ausgangsposition. Ersichtlich ergänzen sich die Abbildungsflächen 13 - 16 mit ihren die Endkontur des Werkstücks 2 nach der ECM-Bearbeitung definierenden Flächenabschnitten, also den Abschnitten im Bereich der Ober- und Unterseite sowie im Bereich der beiden Kanten, und definieren die eindeutige, am Werkstück 2 abgebildete dreidimensionale Endgeometrie. Diese Endgeometrie wird, nachdem die Elektroden 4 - 7 während des gesamten Verstellvorgangs von der Ausgangsstellung gemäß Fig. 2 in die Endstellung gemäß Fig. 2 einander berühren und den Fluidspalt 12 abdichten, ist über den gesamten Werkstückumfang äußerst homogen, da an jeder Stelle um den Umfang des Werkstücks 2 eine Abbildungsfläche der jeweiligen benachbarten Elektrode gegenüberliegt und demzufolge an jeder Position ein Materialabtrag erfolgt. Dieser an jeder Position erfolgende Materialabtrag ist während der gesamten Verstellbewegung, unabhängig vom Betriebsmodus, sichergestellt, so dass sich eine äußerst homogene Abtragung und damit auch ein äußerst homogenes Oberflächenbild erreichen lässt.

Die jeweiligen Elektroden 4 - 7 erstrecken sich über die gesamte Länge des zu bearbeitenden Werkstücks, im gezeigten Beispiel eines Schaufelteils einer Strömungsmaschine. Dieses ist am vorderen und hinteren Ende beispielsweise über einen Schaufelfuß sowie ein Deckband begrenzt, zwischen die die Elektroden 4 - 7 eintauchen.

Die Figuren 4 und 5 zeigen eine weitere Teilansicht einer erfindungsgemäßen ECM-Vorrichtung 1, wobei für gleiche Bauteile gleiche Bezugszeichen verwendet werden. Vorgesehen sind hier nur drei Elektroden 4, 5, 6 mit ihren jeweiligen Abbildungsflächen 13, 14, 15. Wie bei der Ausgestaltung gemäß der Figuren 2 und 3 übergreift die Elektrode 5 mit ihren Gleitflächen 17 die entsprechenden benachbarten Gleitflächen 19 und 20 der Elektroden 4 und 6.

Bei dieser Ausgestaltung ist nur eine kantenseitig abbildende Elektrode 5 vorgesehen. An der gegenüberliegenden Seite ist ein positionsfestes Kanalbauteil 21 vorgesehen, an dem die beiden Elektroden 4 und 6 mit entsprechenden, hier etwas andersartig geformten Kantenabschnitten 22, 23 gleitend und dicht anliegen.

Auch hier sind die Elektroden 4 - 6 über entsprechende Linearantriebseinheiten linear entlang der Bewegungsachsen 8, 9, 10 aufeinander zubewegbar, sie gleiten mit ihren Gleitflächen 17, 19 und 20 aufeinander ab, während die Elektroden 4, 6 mit ihren Kantenbereichen 22, 23 am Kanalbauteil 21 abgleiten. In der in Fig. 5 gezeigten Endposition hat sich der Grad der Überlappung der Elektrode 5 mit den Elektroden 4 und 6 wieder deutlich vergrößert, ähnlich wie beim Ausführungsbeispiel gemäß der Figuren 2 und 3. An der gegenüberliegenden Kantenseite des Werkstücks 2 liegen die Kantenabschnitte 22, 23 der Elektroden 4, 6 aneinander. Aufgrund der Geometrie der jeweiligen Abbildungsflächen 13, 15 der beiden Elektroden 4, 6 im Übergang zu den Kantenabschnitten 22, 23 ist es auch bei dieser nur drei Elektroden aufweisenden Ausgestaltung möglich, die Kante des Werkstücks 2 in diesem Bereich ebenfalls entsprechend einer vorgegebenen Geometrie gerundet auszubilden.

Fig. 4 zeigt in einer vergrößerten Detailansicht wiederum einen Ausschnitt aus einer erfindungsgemäßen ECM-Vorrichtung 1, mit einem Maschinengestell 24, an dem eine Arbeitskammer 25 vorgesehen ist, in der die eigentliche ECM-Bearbeitung stattfindet. Gezeigt sind exemplarisch die vier Elektroden 4, 5, 6, 7 sowie die entsprechenden Linearantriebseinheiten 26, 27, 28, 29.

Jede Linearantriebseinheit 26 - 29, von denen nachfolgend nur eine beschrieben wird, nachdem die Antriebseinheiten dem Grunde nach identisch aufgebaut sind, umfasst einen Antriebsmotor 30 in Form eines Torquemotors 31 umfassend eine Antriebsspindel 32, mit der ein linear verschiebbarer Elektrodenhalter 33 verbunden ist. Die ein Außengewinde aufweisende Antriebsspindel wird über den Torquemotor 31 gedreht. Sie ist in einer positionsfesten Mutter 34 geführt und mit dem Elektrodenhalter 33 gekoppelt. Der Elektrodenhalter 33 wird bei einer Spindelrotation mit der Spindel 32 linear bewegt, je nach Spindeldrehrichtung. Hierüber erfolgt die jeweilige Zustellung der einzelnen Elektroden 4 - 7. Der Aufbau respektive die Konfiguration der gezeigten Linearantriebseinheiten 26 - 29 ist lediglich exemplarischer Natur. Es sind auch andere Linearbewegungskonzepte denkbar, ihnen gemein sollte jedoch ein Torquemotor 31 sein, der einen sehr schnellen, weil mit höherer Frequenz für den PECM-Betrieb erforderlichen intermittierenden Stellbetrieb ermöglicht, und der andererseits auch eine hochpräzise Positionierung erlaubt.

Sämtliche Linearantriebseinheiten 26 - 29 sind separat ansteuerbar, das heißt, dass die übergeordnete Steuerungseinrichtung jeden Torquemotor 31 separat ansteuert, so dass in optimaler Weise die Elektrodenbewegung erfolgen kann.

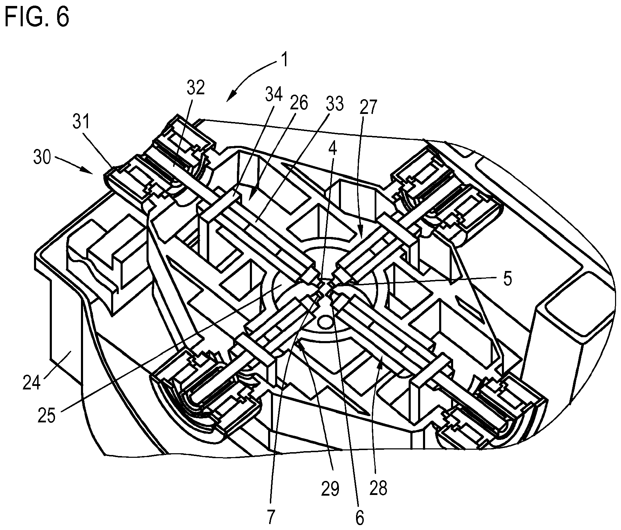

Bei der Ausgestaltung gemäß Fig. 6 sind die Linearantriebseinheiten 26 - 29 positionsfest. Die Torquemotoren 31 sind also unbeweglich, lediglich die Spindeln 32 und die Elektrodenhalter 33 sind linear beweglich geführt. Das heißt, dass der Winkel zwischen den Bewegungsachsen der Linearantriebseinheiten 26 - 29 fest ist, er beträgt wie exemplarisch in Fig. 2 gezeigt 90°.

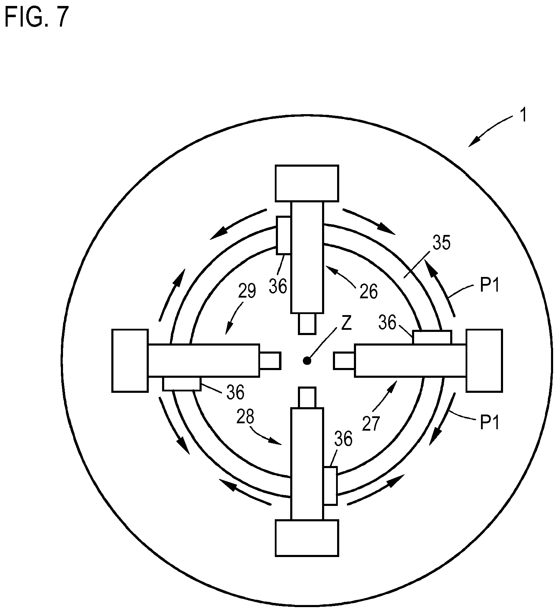

Um bezüglich des Achswinkels eine Variationsmöglichkeit zu geben, ist in Fig. 7 eine Teilansicht einer Vorrichtung 1 gezeigt, bei der die einzelnen Linearantriebseinheiten 26 - 29 längs einer Kreisbahn, wie durch die Pfeile P1 dargestellt, bewegbar sind. Hierzu ist beispielsweise eine kreisförmige Führungsbahn 35 vorgesehen, auf der die Linearantriebseinheiten 26 - 29 über separate Schlittenbauteile oder Ähnliches, die hier nicht näher gezeigt sind, gelagert sind. Sie sind um das Zentrum Z, das in der Mitte der Arbeitskammer 25 liegt, drehbar. Dies geschieht exemplarisch über einen jeweiligen Stell- oder Antriebsmotor 36, vorzugsweise in Form eines Torquemotors oder Servomotors, den jede der dort gezeigten Linearantriebseinheiten 26 - 29 aufweist.

Hierüber ist es möglich, den Winkel der Linearantriebseinheiten 26 - 29 relativ zueinander zu verstellen, wenn dies aus Gründen der Werkstückgeometrie respektive der Elektrodengeometrie der austauschbaren Elektroden erforderlich ist.

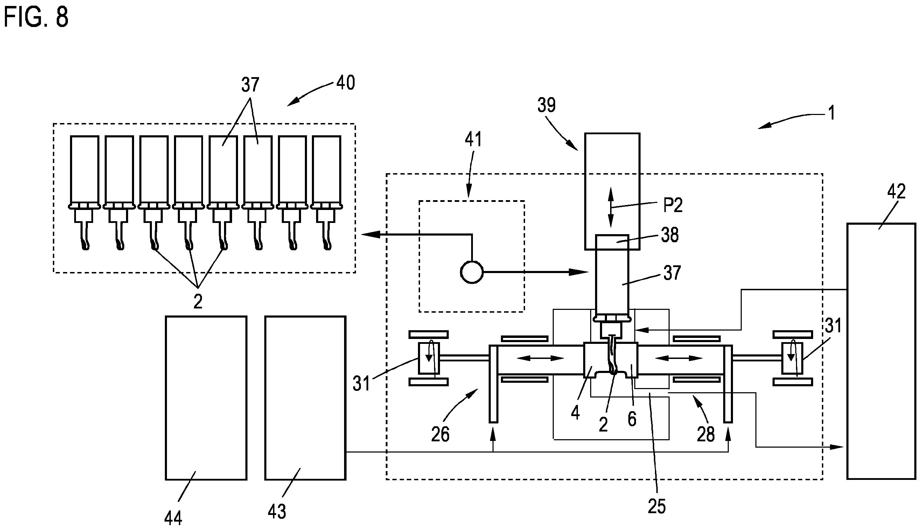

Fig. 8 zeigt schließlich eine Prinzipdarstellung einer erfindungsgemäßen Vorrichtung 1 zur Durchführung des ECM-Verfahrens. Gezeigt sind hier lediglich exemplarisch die beiden Linearantriebseinheiten 26, 28, die beiden anderen stehen orthogonal dazu. Dargestellt sind auch die beiden zugeordneten Elektroden 4, 6 sowie das dazwischen befindliche Werkstück 2.

Das Werkstück 2 ist in einem Werkstückhalter 37 aufgenommen bzw. eingespannt, der von einer Aufnahmeeinrichtung 38 einer Positioniereinrichtung 39 gegriffen ist respektive dort eingespannt ist. Die Positioniereinrichtung 39 weist eine entsprechende, nicht gezeigte Spindel auf, an der die Aufnahmeeinrichtung 38 angeordnet ist. Mit ihr ist es möglich, wie durch den Doppelpfeil P2 dargestellt, das Werkstück 2 in und aus der Arbeitskammer 25 zu bewegen.

Dabei ist es denkbar, dass die Spindel respektive die Aufnahmeeinrichtung 38 während des Bewegens des Werkstücks 2 in die Arbeitsposition und/oder, während sich das Werkstück in der Arbeitsposition befindet, um ihre Längsachse zu drehen, so dass bei einem entsprechenden Twist des Werkstücks 2 dieses zwischen die Elektroden 4 - 7 gefädelt werden kann.

Der Positionierungseinrichtung 39 zugeordnet ist des Weiteren ein Magazin 40 sowie eine optimale, hier gestrichelt dargestellte Wechseleinrichtung 41. In dem Magazin 40 sind eine Mehrzahl an zu bearbeitenden Werkstücken 2, die bereits fest an entsprechenden Werkstückhaltern 37 angeordnet sind, aufgenommen. Dieses Magazin 40 kann von der die Vorrichtung 1 betreuenden Person vorab bestückt werden. Im Betrieb greift z. B. die Wechseleinrichtung 41 den entsprechenden Werkstückhalter 37 des nächsten zu bearbeitenden Werkstücks und verbringt diesen zur Positioniereinrichtung 39, die diesen mit der Aufnahmeeinrichtung 38, die mit der nicht näher gezeigten Spindel gekoppelt ist, greift. In umgekehrter Weise erfolgt der Wechselbetrieb eines bearbeiteten Werkstücks 2 nach der Bearbeitung, dieses wird über die Wechseleinrichtung 41 der Positioniereinrichtung 39 wieder entnommen und in das Magazin 40 verbracht.

Gezeigt ist des Weiteren eine Förder- und Versorgungseinrichtung 42, über die der für den ECM-Betrieb erforderliche Elektrolyt in einem geschlossenen Kreislauf der Arbeitskammer 25 zu- und von dieser abgeführt wird. Die Einrichtung 42 umfasst eine geeignete Pumpe, die den benötigten Arbeitsdruck zur Verfügung stellt.

Dargestellt ist des Weiteren die Energieversorgung 43, umfassend einen Generator, über die die Elektroden 4 - 7, die die Kathoden bilden, sowie das Werkstück 2, das die Anode bildet, mit dem benötigten Arbeitsstrom in Höhe von mehreren 100 bis mehreren 1000 Ampere versorgt werden.

Des Weiteren gezeigt ist eine zentrale Steuerungseinrichtung 44, die den Betrieb sämtlicher Arbeitskomponenten der erfindungsgemäßen Vorrichtung 1 steuert, also der Stromversorgungseinrichtung 43 respektive des Generators, der Einrichtung 42 zur Elektrolytversorgung, der Positioniereinrichtung 39 sowie der Wechseleinrichtung 41. Ihr zugeordnet sind entsprechende Sensoreinrichtungen, die entsprechende Betriebs- oder Positionsparameter etc. ermitteln und auf Basis welcher die Steuerungseinrichtung 44 an den Betrieb steuert. Die Mess- oder Sensoreinrichtungen umfassen entsprechende Sensoren zur hochgenauen Erfassung der jeweiligen Elektrodenposition, was erforderlich für den Ansteuerungsbetrieb der Torquemotoren 31 in beiden Betriebsmodi ist. Darüber hinaus wird hierüber auch die entsprechende Positionierung der Elektroden in der Arbeits- oder der ausgefahrenen Positionen im PECM-Betrieb etc. gesteuert. Gleiches gilt natürlich in Bezug auf die Positioniereinrichtung 39, hier wird die entsprechende Einnahme der Endposition des Werkstücks 2, also der Arbeitsposition, erfasst, wie natürlich auch entsprechende Positionierungen oder Vorgangsabschlüsse im Rahmen des Teilewechsels etc.

Im PECM-Betrieb ist des Weiteren eine hochpräzise Ansteuerung der Stromversorgung 43, also des Generators, erforderlich, da dieser nur gepulst wird. Die Pulsfrequenz des Generators 43, damit aber auch die Frequenz, mit der die Torquemotoren 31 die Elektroden ein- und ausfahren, liegt im Bereich von üblicherweise 5 - 10 Hz, kann aber auch höher sein, beispielsweise bis zu 15 Hz.

Insbesondere ist die Steuerungseinrichtung 44 dafür verantwortlich, den Betriebsmodus der erfindungsgemäßen Vorrichtung 1 vom ersten Betriebsmodus, in dem bei permanent und üblicherweise konstant anliegendem Strom die Elektroden 4 - 7 bevorzugt konstant zugestellt werden, auf den zweiten Betriebsmodus, dem PECM-Betrieb, in dem ein gepulster Materialabtrag erfolgt, umzuschalten. Der Trigger, der zum Umschalten vom ersten in den zweiten Betriebsmodus dient, ist das Erfassen einer entsprechenden Position oder Zwischenposition, die die Elektroden 4 - 7 einnehmen, und die anzeigt, dass über die jeweilige Elektrode hinreichend Material abgetragen wurde. Im ersten Betriebsmodus erfolgt somit quasi eine Grobbearbeitung mit relativ hohem Materialabtrag, während im zweiten, gepulsten PECM-Modus die Feinbearbeitung bis zur Endkontur erfolgt. Dies alles innerhalb einer einzigen Vorrichtung durch die Betriebsmodusumschaltung, sowie in einem einzigen Bewegungszyklus und in einer einzigen Aufspannung, das heißt, dass das Werkstück 2 trotz Durchführung zweier unterschiedlicher Bearbeitungsmodi stets in ein und derselben Position verbleibt, mithin also nicht umzuspannen ist. Dies gilt natürlich auch für die Elektroden 4 - 7, die ebenfalls während beider Betriebsmodi positionsgleich ohne Wechselvorgang eingesetzt werden.

## Patentansprüche

1. Verfahren zur Herstellung eines Metallbauteils, insbesondere eines Schaufelbauteils einer Strömungsmaschine, das zur Erzeugung einer dreidimensionalen Form zur Abtragung von Material elektrochemisch bearbeitet wird, wozu wenigstens eine Elektrode benachbart und über einen Kanalspalt beabstandet zu einem zu bearbeitenden Bauteilabschnitt positioniert und bei Vorhandensein eines Elektrolyten ein Strom und eine Spannung an die Elektrode und das Bauteil angelegt und die Elektrode mittels eines Antriebsmotors aus einer Ausgangsposition in eine Endposition in Richtung des Bauteils bewegt wird, **dadurch gekennzeichnet, dass**
- das Material in einem ersten Arbeitsmodus mit permanent anliegendem Strom und permanent anliegender Spannung, stetigem Elektrolytfluss durch den Kanalspalt und mittels des Antriebsmotors erwirktem stetigem Vorschub der Elektrode aus der Ausgangsposition in Richtung des Bauteils unter Beibehaltung einer ersten Spaltbreite abgetragen wird, wobei die Abtragstiefe kontinuierlich erfasst und kontinuierlich geprüft wird, ob die erfasste Abtragstiefe einer vorbestimmten Abtragstiefe entspricht, und dass
- mit Erreichen der vorbestimmten Abtragstiefe sofort automatisch in einen zweiten Arbeitsmodus gewechselt wird, in dem dieselbe Elektrode wie im ersten Arbeitsmodus mittels desselben Antriebsmotors zyklisch zwischen einer Nichtarbeitsposition und einer Arbeitsposition mit einer zweiten Spaltbreite, die kleiner ist als die erste Spaltbreite, bewegt wird, wobei nur in der Arbeitsposition ein Strom- und Spannungspuls anliegt, und zumindest in der Nichtarbeitsposition der Elektrolyt durch den Spalt strömt, wobei während des zweiten Arbeitsmodus kontinuierlich die Abtragstiefe erfasst wird und die erfasste Abtragstiefe kontinuierlich mit einer zu erreichenden Endtiefe, die das Erreichen der Endposition der Elektrodenzustellung markiert, verglichen wird, wobei der zweite Arbeitsmodus bis zum Erreichen der zu erzeugenden Endgeometrie beibehalten wird.

2. Verfahren nach Anspruch 1, **dadurch gekennzeichnet, dass** die erste Spaltbreite zwischen 0,2 - 0,3 mm und die zweite Spaltbreite zwischen 0,03 - 0,1 mm beträgt.

3. Verfahren nach Anspruch 1 oder 2, **dadurch gekennzeichnet, dass** der permanent anliegende Strom und der Strompuls zwischen 1500 - 20000 A beträgt.

4. Verfahren nach einem der vorangehenden Ansprüche, **dadurch gekennzeichnet, dass** die permanent anliegende Spannung und der Spannungspuls zwischen 6 - 200 V beträgt.

5. Verfahren nach einem der vorangehenden Ansprüche, **dadurch gekennzeichnet, dass** die Frequenz der Bewegung zwischen der Nichtarbeits- und der Arbeitsstellung sowie die Strompulsfrequenz zwischen 5 -15 Hz beträgt.

6. Verfahren nach einem der vorangehenden Ansprüche, **dadurch gekennzeichnet, dass** der Druck des den Kanalspalt durchströmenden Elektrolyten zwischen 5 - 20 bar beträgt.

7. Verfahren nach einem der vorangehenden Ansprüche, **dadurch gekennzeichnet, dass** als Antriebsmotor ein Torquemotor verwendet wird.

8. Verfahren nach einem der vorangehenden Ansprüche, **dadurch gekennzeichnet, dass** mehrere Elektroden gleichzeitig relativ zu dem Bauteil im ersten und im zweiten Arbeitsmodus bewegt werden, wobei jede Elektrode mittels eines separaten Antriebsmotors bewegt wird.

9. Verfahren nach Anspruch 8, **dadurch gekennzeichnet, dass** sich die Elektroden, aneinander anliegend, randseitig überlappen und den Spalt gemeinsam begrenzen.

10. Verfahren nach Anspruch 9, **dadurch gekennzeichnet, dass** wenigstens drei Elektroden verwendet werden, wobei die beiden äußeren Elektroden an einem positionsfesten, den Kanalspalt begrenzenden Dichtbauteil entlanggleiten.

11. Verfahren nach Anspruch 9, **dadurch gekennzeichnet, dass** vier Elektroden verwendet werden, die den das Bauteil umlaufenden Kanalspalt begrenzen.

12. Vorrichtung zur Durchführung des Verfahrens nach einem der vorangehenden Ansprüche, umfassend wenigstens eine Elektrode, die mittels eines Antriebsmotors relativ zu einem zur Erzeugung einer dreidimensionalen Form durch Abtragung von Material elektrochemisch zu bearbeitenden Bauteils bewegbar ist, wozu die Elektrode mittels eines Antriebsmotors benachbart und über einen Kanalspalt beabstandet zu einem zu bearbeitenden Bauteilabschnitt positioniert und bei Vorhandensein eines Elektrolyten ein Strom und eine Spannung an die Elektrode und das Bauteil angelegt wird, wobei der Betrieb des Antriebsmotors, eines Stromgenerators sowie einer den Elektrolyten fördernden Pumpeinrichtung mittels einer Steuerungseinrichtung gesteuert wird, **dadurch gekennzeichnet, dass** die Steuerungseinrichtung derart ausgebildet ist, dass
- die Elektrode in einem ersten Arbeitsmodus bei permanent anliegendem Strom und permanent anliegender Spannung und stetigem Elektrolytfluss durch den Kanalspalt mit stetigem Vorschub unter Beibehaltung einer ersten Spaltbreite in Richtung des Bauteils bewegbar ist, wobei die Abtragstiefe kontinuierlich erfasst und kontinuierlich geprüft wird, ob die erfasste Abtragstiefe einer vorbestimmten Abtragstiefe entspricht, und dass
- mit Erreichen der vorbestimmten Abtragtiefe dieselbe Elektrode wie im ersten Arbeitsmodus unter sofortigem automatischem Wechsel in einen zweiten Arbeitsmodus mit Erreichen einer vorbestimmten Abtragtiefe mittels desselben Antriebsmotors zyklisch zwischen einer Nichtarbeitsposition und einer Arbeitsposition mit einer zweiten Spaltbreite, die kleiner ist als die erste Spaltbreite, bewegbar ist, wobei nur in der Arbeitsposition ein Strom- und Spannungspuls anliegt, und zumindest in der Nichtarbeitsposition der Elektrolyt durch den Spalt strömt, wobei während des zweiten Arbeitsmodus kontinuierlich die Abtragstiefe erfasst wird und die erfasste Abtragstiefe kontinuierlich mit einer zu erreichenden Endtiefe, die das Erreichen der Endposition der Elektrodenzustellung markiert, verglichen wird, wobei der zweite Arbeitsmodus bis zum Erreichen der zu erzeugenden Endgeometrie beibehalten wird.

13. Vorrichtung nach Anspruch 12, **dadurch gekennzeichnet, dass** wenigstens drei Elektroden (, 5, 6, 7) vorgesehen sind, die um den Umfang des Werkstücks (2) versetzt angeordnet sind und sich mit ihren Abbildungsflächen (13, 14, 15, 16) während der gesamten Verstellbewegung von der Ausgangs- in die Endposition einander berührend abschnittsweise übergreifen und mit ihren Abbildungsflächen (13, 14, 15, 16) einen um den Umfang des Werkstücks (2) geschlossen umlaufenden Kanalspalt (12) begrenzen.

14. Vorrichtung nach Anspruch 13, **dadurch gekennzeichnet, dass** eine zwischen zwei Elektroden (4, 6) vorgesehene Elektrode (5, 7) an der Abbildungsfläche (14, 16) zwei Gleitflächen (17, 18) aufweist, mit denen sie auf jeweiligen äußeren Gleitflächen (19, 20) der beiden benachbarten Elektroden (4, 6) gleitet.

15. Vorrichtung nach Anspruch 13 oder 14, **dadurch gekennzeichnet, dass** zwei einander gegenüberliegende Elektroden (4, 6) die Ober- und die Unterseite des Werkstücks (2) abbildende Abbildungsflächen (13, 15) aufweisen, während die wenigstens eine zwischen diesen angeordnete dritte Elektrode (5) eine den Kantenbereich des Werkstücks (2) abbildende Abbildungsfläche (14) aufweist.

16. Vorrichtung nach Anspruch 15, **dadurch gekennzeichnet, dass** eine der dritten Elektrode (5) gegenüberliegend angeordnete vierte Elektrode (7) vorgesehen ist, die ebenfalls eine den Kantenbereich des Werkstücks (2) abbildende Abbildungsfläche (16) aufweist.

17. Vorrichtung nach einem der Ansprüche 13 bis 16, **dadurch gekennzeichnet, dass** bei drei Elektroden (4, 5, 6) die beiden äußeren Elektroden (4, 6) an einem den Fluidkanal (12) begrenzenden, positionsfesten Dichtbauteil (21) entlang gleiten.

18. Vorrichtung nach einem der Ansprüche 13 bis 16, **dadurch gekennzeichnet, dass** bei vier Elektroden (4, 5, 6, 7) zwei einander gegenüberliegende Elektroden (5, 7) die beiden anderen Elektroden (4, 6) übergreifen.

19. Vorrichtung nach einem der Ansprüche 13 bis 18, **dadurch gekennzeichnet, dass** die Bewegungsachsen (8, 9, 10, 11) der Linearantriebseinheiten (26, 27, 28, 29) zweier benachbarter Elektroden (4, 5, 6, 7) unter einem Winkel von 90° zueinander stehen, oder dass die Bewegungsachsen (8, 9, 10, 11) der Linearantriebseinheiten (26, 27, 28, 29) zweier benachbarter Elektroden (4, 5, 6, 7) unter einem Winkel kleiner oder größer 90° zueinander stehen.

20. Vorrichtung nach einem der Ansprüche 13 bis 19, **dadurch gekennzeichnet, dass** die Linearantriebseinheiten (26, 27, 28, 29) zur Verstellung des Winkels zwischen den Bewegungsachsen (8, 9, 10, 11) zweier benachbarter Linearantriebseinheiten (26, 27, 28, 29) längs einer Kreisbahn (35) bewegbar sind, wobei vorzugsweise jede Linearantriebseinheit (26, 27, 28, 29) über einen Stellmotor (31) längs der Kreisbahn bewegbar ist.

21. Vorrichtung nach einem der Ansprüche 12 bis 20, **dadurch gekennzeichnet, dass** der oder jeder Antriebsmotor ein Torquemotor (31) ist.

22. Vorrichtung nach einem der Ansprüche 13 bis 21, **dadurch gekennzeichnet, dass** jeder Elektrode (4, 5, 6, 7) eine mit einer Steuerungseinrichtung (44) kommunizierende Sensoreinrichtung zugeordnet ist, über die die Position der Elektrode (4, 5, 6, 7) erfassbar ist, wobei die Steuerungseinrichtung (44) den Betrieb in Abhängigkeit der Sensorerfassung steuert.

23. Vorrichtung nach einem der Ansprüche 12 bis 22, **dadurch gekennzeichnet, dass** eine Positioniereinrichtung (39) zum automatischen Positionieren des Werkstücks (2) in der Arbeitsposition in einer Arbeitskammer (25) vorgesehen ist.

24. Vorrichtung nach Anspruch 23, **dadurch gekennzeichnet, dass** das Werkstück mittels der Positionierungseinrichtung während der Verbringung des Werkstücks (2) in die Arbeitsposition und/oder während sich das Werkstück (2) in der Arbeitsposition befindet um ihre Längsachse drehbar ist.

25. Vorrichtung nach Anspruch 23 oder 24, **dadurch gekennzeichnet, dass** ein der Positioniereinrichtung (39) zugeordnetes Magazin (40) vorgesehen ist, in dem mehrere zu bearbeitende Werkstücke (2) einbringbar sind, die über die Positioniereinrichtung (39) oder eine Wechseleinrichtung (41) automatisch entnehmbar sind.

26. Vorrichtung nach Anspruch 25, **dadurch gekennzeichnet, dass** jedes Werkstück (2) in einem Werkstückhalter (37), der über die Positioniereinrichtung (39) oder die Wechseleinrichtung (41) greifbar ist, aufgenommen ist.

## Claims

1. Method for the production of a metal component, in particular a vane component of a turbomachine, which, in order to generate a three-dimensional shape, is electrochemically machined to remove material, to which end at least one electrode is positioned so as to be adjacent to and, by way of a duct gap, spaced apart from a component portion to be machined, and in the presence of an electrolyte a current and a voltage are applied to the electrode and the component, and the electrode is moved in the direction of the component from an initial position to a terminal position by means of a drive motor, **characterized in that**
- in a first operating mode, the material is removed, with a permanently applied current and a permanently applied voltage and a constant electrolyte flow through the duct gap, by means of constant advancement of the electrode, effected by means of the drive motor, from the initial position in the direction of the component while maintaining a first gap width, wherein the material removal depth is continuously detected and it is continuously checked whether the detected material removal depth corresponds to a predetermined material removal depth; and **in that**,
- when the predetermined material removal depth is reached, an automatic changeover to a second operating mode takes place immediately **in that** the same electrode as in the first operating mode is moved by means of the same drive motor in a cyclical manner between a non-operating position and an operating position having a second gap width which is smaller than the first gap width, wherein a current pulse and voltage pulse are applied only in the operating position, and the electrolyte flows through the gap at least in the non-operating position, wherein, during the second operating mode, the material removal depth is continuously detected and the detected material removal depth is continuously compared with a final depth to be achieved, the latter marking the achievement of the terminal position of the electrode actuation, wherein the second operating mode is maintained until the final geometry to be generated has been achieved.

2. Method according to Claim 1, **characterized in that** the first gap width is between 0.2 and 0.3 mm, and the second gap width is between 0.03 and 0.1 mm.

3. Method according to Claim 1 or 2, **characterized in that** the permanently applied current and the current pulse are between 1500 and 20 000 A.

4. Method according to one of the preceding claims, **characterized in that** the permanently applied voltage and the voltage pulse are between 6 and 200 V.

5. Method according to one of the preceding claims, **characterized in that** the frequency of the movement between the non-operating position and the operating position, and the current pulse frequency, are between 5 and 15 Hz.

6. Method according to one of the preceding claims, **characterized in that** the pressure of the electrolyte flowing through the duct gap is between 5 and 20 bar.

7. Method according to one of the preceding claims, **characterized in that** a torque motor is used as a drive motor.

8. Method according to one of the preceding claims, **characterized in that** a plurality of electrodes are moved simultaneously relative to the component in the first and the second operating mode, wherein each electrode is moved by means of a separate drive motor.

9. Method according to Claim 8, **characterized in that** the electrodes, bearing on one another, overlap one another on the periphery and conjointly delimit the gap.

10. Method according to Claim 9, **characterized in that** at least three electrodes are used, wherein the two outer electrodes slide along a positionally fixed sealing component that delimits the duct gap.

11. Method according to Claim 9, **characterized in that** four electrodes which delimit the duct gap running around the component are used.

12. Device for carrying out the method according to one of the preceding claims, comprising at least one electrode which by means of a drive motor is movable relative to a component which, in order to generate a three-dimensional shape, is to be electrochemically machined by removing material, to which end the electrode, by means of a drive motor, is positioned so as to be adjacent to and, by way of a duct gap, spaced apart from a component portion to be machined, and in the presence of an electrolyte a current and a voltage are applied to the electrode and the component, wherein the operation of the drive motor, a power generator, and a pump installation that conveys the electrolytes is controlled by means of a control installation, **characterized in that** the control installation is configured in such a manner that
- in a first operating mode, the electrode, in the event of a permanently applied current and a permanently applied voltage and a constant electrolyte flow through the duct gap, is movable with constant advancement in the direction of the component while maintaining a first gap width, wherein the material removal depth is continuously detected and it is continuously checked whether the detected material removal depth corresponds to a predetermined material removal depth; and **in that**,
- when the predetermined material removal depth is reached, the same electrode as in the first operating mode, with an immediate automatic changeover to a second operating mode when a predetermined material removal depth is reached, is movable by means of the same drive motor in a cyclical manner between a non-operating position and an operating position having a second gap width which is smaller than the first gap width, wherein a current pulse and voltage pulse are applied only in the operating position, and the electrolyte flows through the gap at least in the non-operating position, wherein, during the second operating mode, the material removal depth is continuously detected and the detected material removal depth is continuously compared with a final depth to be achieved, the latter marking the achievement of the terminal position of the electrode actuation, wherein the second operating mode is maintained until the final geometry to be generated has been achieved.

13. Device according to Claim 12, **characterized in that** at least three electrodes (5, 6, 7) which are disposed so as to be offset around the periphery of the workpiece (2) are provided and said three electrodes, by way of the reproduction faces (13, 14, 15, 16) thereof, engage across one another with mutual contact in portions during the entire adjustment movement from the initial position to the terminal position, and, by way of the reproduction faces (13, 14, 15, 16) thereof, delimit a closed duct gap (12) that runs around the periphery of the workpiece (2).

14. Device according to Claim 13, **characterized in that** an electrode (5, 7), that is provided between two electrodes (4, 6), on the reproduction face (14, 16) has two sliding faces (17, 18) by way of which said electrode slides on respective outer sliding faces (19, 20) of the two adjacent electrodes (4, 6).

15. Device according to Claim 13 or 14, **characterized in that** two mutually opposite electrodes (4, 6) have reproduction faces (13, 15) reproducing the upper and lower side of the workpiece (2), while the at least one third electrode (5), disposed between said two mutually opposite electrodes, has a reproduction face (14) that reproduces the edge region of the workpiece (2).

16. Device according to Claim 15, **characterized in that** a fourth electrode (7), disposed opposite the third electrode (5), is provided, said fourth electrode likewise having a reproduction face (16) that reproduces the edge region of the workpiece (2).

17. Device according to one of Claims 13 to 16, **characterized in that**, in the case of three electrodes (4, 5, 6), the two outer electrodes (4, 6) slide along a positionally fixed sealing component (21) that delimits the fluid duct (12).

18. Device according to one of Claims 13 to 16, **characterized in that**, in the case of four electrodes (4, 5, 6, 7), two mutually opposite electrodes (5, 7) engage across the two other electrodes (4, 6).

19. Device according to one of Claims 13 to 18, **characterized in that** the motion axes (8, 9, 10, 11) of the linear drive units (26, 27, 28, 29) of two adjacent electrodes (4, 5, 6, 7) are at a mutual angle of 90°, or **in that** the motion axes (8, 9, 10, 11) of the linear drive units (26, 27, 28, 29) of two adjacent electrodes (4, 5, 6, 7) are at a mutual angle of less than or greater than 90°.

20. Device according to one of Claims 13 to 19, **characterized in that** the linear drive units (26, 27, 28, 29), in order to adjust the angle between the motion axes (8, 9, 10, 11) of two adjacent linear drive units (26, 27, 28, 29), are movable along a circular path (35), wherein each linear drive unit (26, 27, 28, 29) is preferably movable along the circular path by way of a servomotor (31).

21. Device according to one of Claims 12 to 20, **characterized in that** the, or each, drive motor is a torque motor (31).

22. Device according to one of Claims 13 to 21, **characterized in that** each electrode (4, 5, 6, 7) is assigned a sensor installation that communicates with a control installation (44), the position of the electrodes (4, 5, 6, 7) being detectable by way of said sensor installation, wherein the control installation (44) controls the operation depending on the sensor detection.

23. Device according one of Claims 12 to 22, **characterized in that** a positioning installation (39) for automatically positioning the workpiece (2) in the operating position in an operating chamber (25) is provided.

24. Device according to Claim 23, **characterized in that** the workpiece is rotatable by means of the positioning installation about the longitudinal axis thereof during the transfer of the workpiece (2) to the operating position and/or while the workpiece (2) is in the operating position.

25. Device according to Claim 23 or 24, **characterized in that** a magazine (40) in which a plurality of workpieces (2) to be machined are introducible and which is assigned to the positioning installation (39) is provided, said workpieces being automatically retrievable by way of the positioning installation (39) or a changeover installation (41).

26. Device according to Claim 25, **characterized in that** each workpiece (2) is received in a workpiece holder (37) which is graspable by way of the positioning installation (39) or the changeover installation (41) .

## Revendications

1. Procédé de fabrication d'une pièce métallique, en particulier d'une pièce à aubes d'une turbomachine, qui est usinée par voie électrochimique pour produire une forme tridimensionnelle pour l'enlèvement de matière, au moins une électrode étant positionnée à cet effet à proximité et à distance d'une section de pièce à usiner par l'intermédiaire d'une fente de canal et un courant et une tension étant appliqués à l'électrode et à la pièce en présence d'un électrolyte et l'électrode étant déplacée au moyen d'un moteur d'entraînement d'une position initiale à une position finale en direction de la pièce, **caractérisé en ce que**
- le matériau est enlevé dans un premier mode de travail avec un courant et une tension appliqués en permanence, un flux d'électrolyte constant à travers la fente du canal et une avance constante de l'électrode, obtenue au moyen du moteur d'entraînement, depuis la position initiale en direction de la pièce, en conservant une première largeur de fente, la profondeur d'enlèvement étant détectée en continu et un contrôle continu étant effectué pour vérifier si la profondeur d'enlèvement détectée correspond à une profondeur d'enlèvement prédéterminée, et **en ce que**
- lorsque la profondeur d'enlèvement prédéterminée est atteinte, on passe immédiatement et automatiquement à un deuxième mode de travail dans lequel la même électrode que dans le premier mode de travail est déplacée de manière cyclique au moyen du même moteur d'entraînement entre une position de non-travail et une position de travail avec une deuxième largeur de fente qui est inférieure à la première largeur de fente, une impulsion de courant et de tension n'étant appliquée que dans la position de travail, et, au moins dans la position de non-travail, l'électrolyte s'écoule à travers la fente, la profondeur d'enlèvement étant détectée en continu pendant le deuxième mode de travail et la profondeur d'enlèvement détectée étant comparée en continu à une profondeur finale à atteindre, qui marque l'atteinte de la position finale de l'approche de l'électrode, le deuxième mode de travail étant maintenu jusqu'à l'atteinte de la géométrie finale à produire.

2. Procédé selon la revendication 1, **caractérisé en ce que** la première largeur de fente est comprise entre 0,2 et 0,3 mm et la deuxième largeur de fente est comprise entre 0,03 et 0,1 mm.

3. Procédé selon la revendication 1 ou 2, **caractérisé en ce que** le courant appliqué en permanence et l'impulsion de courant sont compris entre 1500 et 20000 A.

4. Procédé selon l'une des revendications précédentes, **caractérisé en ce que** la tension appliquée en permanence et l'impulsion de tension sont comprises entre 6 et 200 V.

5. Procédé selon l'une quelconque des revendications précédentes, **caractérisé en ce que** la fréquence du mouvement entre la position de non-travail et la position de travail ainsi que la fréquence de l'impulsion de courant sont comprises entre 5 et 15 Hz.

6. Procédé selon l'une quelconque des revendications précédentes, **caractérisé en ce que** la pression de l'électrolyte traversant la fente du canal est comprise entre 5 et 20 bars.

7. Procédé selon l'une des revendications précédentes, **caractérisé en ce que** le moteur d'entraînement utilisé est un moteur couple.

8. Procédé selon l'une quelconque des revendications précédentes, **caractérisé en ce que** plusieurs électrodes sont déplacées simultanément par rapport au composant dans le premier et le deuxième mode de fonctionnement, chaque électrode étant déplacée au moyen d'un moteur d'entraînement séparé.

9. Procédé selon la revendication 8, **caractérisé en ce que** les électrodes, adjacentes les unes aux autres, se chevauchent sur les bords et délimitent ensemble la fente.

10. Procédé selon la revendication 9, **caractérisé en ce qu'**au moins trois électrodes sont utilisées, les deux électrodes extérieures glissant le long d'un élément d'étanchéité à position fixe délimitant l'interstice du canal.

11. Procédé selon la revendication 9, **caractérisé en ce que** l'on utilise quatre électrodes qui délimitent l'interstice de canal entourant le composant.

12. Dispositif pour la mise en œuvre du procédé selon l'une des revendications précédentes, comprenant au moins une électrode qui peut être déplacée au moyen d'un moteur d'entraînement par rapport à une pièce à usiner par voie électrochimique pour créer une forme tridimensionnelle par enlèvement de matière, à cet effet, l'électrode est positionnée au moyen d'un moteur d'entraînement à proximité et à distance d'une section de pièce à usiner par l'intermédiaire d'une fente de canal et, en présence d'un électrolyte, un courant et une tension sont appliqués à l'électrode et à la pièce, le fonctionnement du moteur d'entraînement, d'un générateur de courant ainsi que d'un dispositif de pompage transportant l'électrolyte étant commandé au moyen d'un dispositif de commande, **caractérisé en ce que** le dispositif de commande est réalisé de telle sorte que
- l'électrode peut être déplacée en direction de la pièce dans un premier mode de travail avec un courant appliqué en permanence et une tension appliquée en permanence et un flux d'électrolyte constant à travers la fente du canal avec une avance constante en conservant une première largeur de fente, la profondeur d'enlèvement étant détectée en continu et un contrôle continu étant effectué pour vérifier si la profondeur d'enlèvement détectée correspond à une profondeur d'enlèvement prédéterminée, et **en ce que**
- lorsque la profondeur d'enlèvement prédéterminée est atteinte, la même électrode que dans le premier mode de travail peut être déplacée de manière cyclique au moyen du même moteur d'entraînement entre une position de non-travail et une position de travail avec une deuxième largeur de fente qui est inférieure à la première largeur de fente, une impulsion de courant et de tension n'étant appliquée que dans la position de travail, avec un changement automatique immédiat dans un deuxième mode de travail lorsqu'une profondeur d'enlèvement prédéterminée est atteinte, et, au moins dans la position de non-travail, l'électrolyte s'écoule à travers la fente, la profondeur d'enlèvement étant détectée en continu pendant le deuxième mode de travail et la profondeur d'enlèvement détectée étant comparée en continu à une profondeur finale à atteindre, qui marque l'atteinte de la position finale de l'approche de l'électrode, le deuxième mode de travail étant maintenu jusqu'à l'atteinte de la géométrie finale à produire.

13. Dispositif selon la revendication 12, **caractérisé en ce qu'**il est prévu au moins trois électrodes (5, 6, 7) qui sont disposées de manière décalée autour de la périphérie de la pièce à usiner (2) et qui se chevauchent par sections en se touchant avec leurs surfaces de reproduction (13, 14, 15, 16) pendant tout le mouvement de réglage de la position initiale à la position finale et qui délimitent avec leurs surfaces de reproduction (13, 14, 15, 16) une fente de canal (12) périphérique fermée autour de la périphérie de la pièce à usiner (2).

14. Dispositif selon la revendication 13, **caractérisé en ce qu'**une électrode (5, 7) prévue entre deux électrodes (4, 6) présente sur la surface de reproduction (14, 16) deux surfaces de glissement (17, 18) avec lesquelles elle glisse sur des surfaces de glissement extérieures respectives (19, 20) des deux électrodes voisines (4, 6).

15. Dispositif selon la revendication 13 ou 14, **caractérisé en ce que** deux électrodes (4, 6) opposées l'une à l'autre présentent des surfaces de reproduction (13, 15) reproduisant les faces supérieure et inférieure de la pièce (2), tandis que ladite au moins une troisième électrode (5) disposée entre celles-ci présente une surface de reproduction (14) reproduisant la zone de bord de la pièce (2).

16. Dispositif selon la revendication 15, **caractérisé en ce qu'**il est prévu une quatrième électrode (7) disposée en face de la troisième électrode (5), qui présente également une surface de reproduction (16) reproduisant la zone de bord de la pièce à usiner (2).

17. Dispositif selon l'une des revendications 13 à 16, **caractérisé en ce que**, dans le cas de trois électrodes (4, 5, 6), les deux électrodes extérieures (4, 6) glissent le long d'une pièce d'étanchéité (21) fixe en position et délimitant le canal fluidique (12).

18. Dispositif selon l'une des revendications 13 à 16, **caractérisé en ce que**, dans le cas de quatre électrodes (4, 5, 6, 7), deux électrodes (5, 7) opposées l'une à l'autre chevauchent les deux autres électrodes (4, 6).

19. Dispositif selon l'une des revendications 13 à 18, **caractérisé en ce que** les axes de déplacement (8, 9, 10, 11) des unités d'entraînement linéaire (26, 27, 28, 29) de deux électrodes (4, 5, 6, 7) voisines font entre eux un angle de 90°, ou **en ce que** les axes de déplacement (8, 9, 10, 11) des unités d'entraînement linéaire (26, 27, 28, 29) de deux électrodes (4, 5, 6, 7) voisines font entre eux un angle inférieur ou supérieur à 90°.

20. Dispositif selon l'une des revendications 13 à 19, **caractérisé en ce que** les unités d'entraînement linéaire (26, 27, 28, 29) sont mobiles le long d'une trajectoire circulaire (35) pour régler l'angle entre les axes de déplacement (8, 9, 10, 11) de deux unités d'entraînement linéaire (26, 27, 28, 29) voisines, chaque unité d'entraînement linéaire (26, 27, 28, 29) étant de préférence mobile le long de la trajectoire circulaire par l'intermédiaire d'un servomoteur (31).

21. Dispositif selon l'une des revendications 12 à 20, **caractérisé en ce que** le ou chaque moteur d'entraînement est un moteur relie (31).

22. Dispositif selon l'une des revendications 13 à 21, **caractérisé en ce qu'**à chaque électrode (4, 5, 6, 7) est associé un dispositif de détection communiquant avec un dispositif de commande (44) et permettant de détecter la position de l'électrode (4, 5, 6, 7), le dispositif de commande (44) commandant le fonctionnement en fonction de la détection du capteur.

23. Dispositif selon l'une des revendications 12 à 22, **caractérisé en ce qu'**il est prévu un dispositif de positionnement (39) pour positionner automatiquement la pièce (2) dans la position de travail dans une chambre de travail (25).

24. Dispositif selon la revendication 23, **caractérisé en ce que** la pièce est mobile en rotation autour de son axe longitudinal au moyen du dispositif de positionnement pendant l'amenée de la pièce (2) dans la position de travail et/ou pendant que la pièce (2) est dans la position de travail.

25. Dispositif selon la revendication 23 ou 24, **caractérisé en ce qu'**il est prévu un magasin (40) associé au dispositif de positionnement (39), dans lequel peuvent être introduites plusieurs pièces à usiner (2), qui peuvent être prélevées automatiquement par le dispositif de positionnement (39) ou par un dispositif de changement (41) .

26. Dispositif selon la revendication 25, **caractérisé en ce que** chaque pièce à usiner (2) est reçue dans un porte-pièce (37) qui peut être saisi par le dispositif de positionnement (39) ou le dispositif de changement (41) .
